# EUROPÄISCHE PATENTSCHRIFT

(11) **EP 0 777 059 B1**
(45) Veröffentlichungstag und Bekanntmachung des Hinweises auf die Patenterteilung: **08.05.2002**
(21) Anmeldenummer: 96118572.5
(22) Anmeldetag: 20.11.1996
(51) Int. Cl.: F16D 3/68, F16F 15/123

(54) **Kupplung mit Torsionsschwingungsdämpfer**
Clutch with torsional vibration damper
Embrayage avec amortisseur de torsion

(30) Priorität: 01.12.1995 DE 19544832
(43) Veröffentlichungstag der Anmeldung: 04.06.1997
(60) Teilanmeldung: 01105077.0
(73) Patentinhaber: Rohs-Voigt Patentverwertungsgesellschaft mbH, 52351 Düren (DE)
(72) Erfinder: Rohs, Ulrich Dr.Ing., 52351 Düren (DE); Heidingsfeld, Dietmar Dipl.Ing., 52078 Aachen (DE)
(74) Vertreter: Castell, Klaus, Dr.-Ing.

(56) Entgegenhaltungen:
- EP-A- 0 082 595
- EP-A- 0 474 035
- DE-B- 1 239 144
- US-A- 3 106 828
- US-A- 4 396 103
- PATENT ABSTRACTS OF JAPAN vol. 009, no. 067 (M-366), 27.März 1985 & JP 59 200815 A (DAIKIN SEISAKUSHO:KK), 14.November 1984,

## Beschreibung

Die Erfindung betrifft eine Kupplung nach dem Oberbegriff des Patentanspruches 1.

Bei Kupplungen ist es nachteilig, wenn die Drehschwingungen des Motors in den Abtriebsstrang übertragen werden, insbesondere dann, wenn die Frequenzen den Eigenfrequenzen des Systems nahe kommen. Dies ist besonders im Leerlauf unangenehm.

Um dies zu vermeiden, sind verschiedene Konstruktionen bekannt, bei denen elastische Dämpfungsmittel in Form von Federn oder hydraulischen Bauteilen zwischen den Kupplungsteilen angeordnet sind. Diese Konstruktionen haben den Nachteil, daß sie stets nur einen Teil des Arbeitsspektrums des Antriebes umfassen, aber im übrigen Lastbereich wirkungslos sind. Letzteres gilt insbesondere für den Leerlaufbereich. Das Problem liegt darin, daß für den Lastbereich eine dem übertragenen Drehmoment und der Drehzahl entsprechende hohe Federkraft und Dämpfung erforderlich sind, während beim Leerlauf bereits geringe Federkräfte und so gut wie keine Dämpfung genügen, um eine Leerlaufentkopplung ("idle-Entkopplung") zu erreichen. Hinzu kommt, daß die bekannten Ausführungen sehr aufwendig und daher teuer gebaut sind.

Eine gattungsgemäße Anordnung findet sich beispielsweise in der EP 0 474 035 A1, in welcher eine Kupplung offenbart ist, die aus einer umlaufenden Antriebsscheibe und einer hierzu koaxialen, gleichsinnig umlaufenden Abtriebsscheibe mit Mitteln zur elastischen Kraftübertragung besteht, wobei die Antriebsscheibe die Abtriebsscheibe teilweise übergreift und die Abtriebsscheibe eine Mantelfläche aufweist, die im Querschnitt im wesentlichen polygonal ist. Auch diese Kupplung, bei welcher die Rückstellkräfte durch Kugeln aufgebracht werden, baut verhältnismäßig kompliziert und somit kostspielig.

Aufgabe der Erfindung ist es, eine Kupplung zu schaffen, die eine Schwingungsentkopplung auf allen Lastbereichen eines Antriebes einschließlich des Leerlaufbereiches ermöglicht und überdies einfach und preiswert ist. Dies ist besonders wichtig für Fahrzeugantriebe.

Die gestellte Aufgabe wird erfindungsgemäß durch die kennzeichnenden Merkmale des Patentanspruches 1 gelöst.

Dabei dienen die Schubkolben als elastische Kraftübertragungsmittel und als Mittel zur Dämpfung der Drehschwingungen. Je nach der Drehrichtung der Antriebsscheibe wird der eine oder andere Schubkolben gegen die Wirkung der sie verbindenden Druckfedern gegen die Mitte der Taschen verschoben und nimmt dabei einerseits die Abtriebsscheibe mit und übt andererseits eine Reibungskraft auf die Mantelfläche der Tasche aus. die zu einer Dämpfung der Drehschwingungen der Antriebsscheibe auf den Abtriebsstrang führt. Diese Dämpfung ist last- und drehzahlabhängig.

Beim Leerlauf ist keine Reibungskraft zur Dämpfung der Drehschwingungen erforderlich. Es genügen geringe Federkräfte, um ein Rückstellmoment von der Antriebs- auf die Abtriebsscheibe aufzubauen und die Drehschwingungen zu entkoppeln. Zu diesem Zweck sind an der Antriebsscheibe oder an den Schubkolben geeignete Mittel, z.B. in der Form von tangentialen oder radialen Federn vorgesehen, die auf zugeordnete Flächen der Antriebsscheibe einwirken.

In den Unteransprüchen sind weitere vorteilhafte Ausgestaltungen der Erfindung angegeben.

Mit der erfindungsgemäßen schwingungsdämpfenden mechanischen Kupplung ist es möglich, einen großen Teil des Einsatzbereiches der derzeit üblichen elastischen Kupplungreibscheiben bei Kraftfahrzeugen abzudecken.

Nachstehend ist die Erfindung anhand der Zeichnung näher erläutert. Es zeigen:
- Fig.1: einen Querschnitt durch eine Kupplung nach der Erfindung,
- Fig.2: einen axialen Querschnitt durch die Kupplung,
- Fig.3: eine vergrößerte Einzelheit der Fig.1 bei Belastung,
- Fig.4: eine Ausführungsform einer Tasche in der Antriebsscheibe
- Fig.5: eine andere Ausführungsform einer Tasche in der Antriebsscheibe,
- Fig.6: eine Ausführungsform mit tangentialer Leerlaufabstützung in Querschnitten nach den Linien VIa-VIa und VIb-VIb in Fig.7 und
- Fig.7: einen axialen Längsschnitt nach der Linie VII-VII in Fig.6

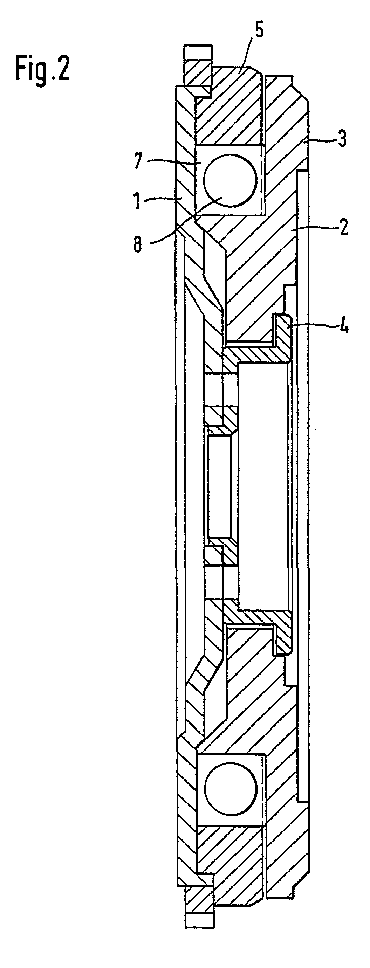

Die Zeichnung zeigt eine mechanische Kupplung mit torsionsschwingungsdämpfenden Eigenschaften in der Leerlaufstellung. Die Kupplung besteht aus einer Antriebsscheibe 1 und einer hierzu koaxialen Abtriebsscheibe 2. Am rückwärtigen Teil 3 der Abtriebsscheibe 2 (Fig.2) greift ein nicht dargestellter Abtriebsstrang mit weiteren Kupplungselementen einer Schaltkupplung oder dgl. an.

Wie Fig.2 zeigt, sitzt die Abtriebsscheibe 2 auf einer Zentriernabe 4, die ein axiales Z-förmiges Profil hat und mit der Antriebsscheibe 1 verbunden ist.

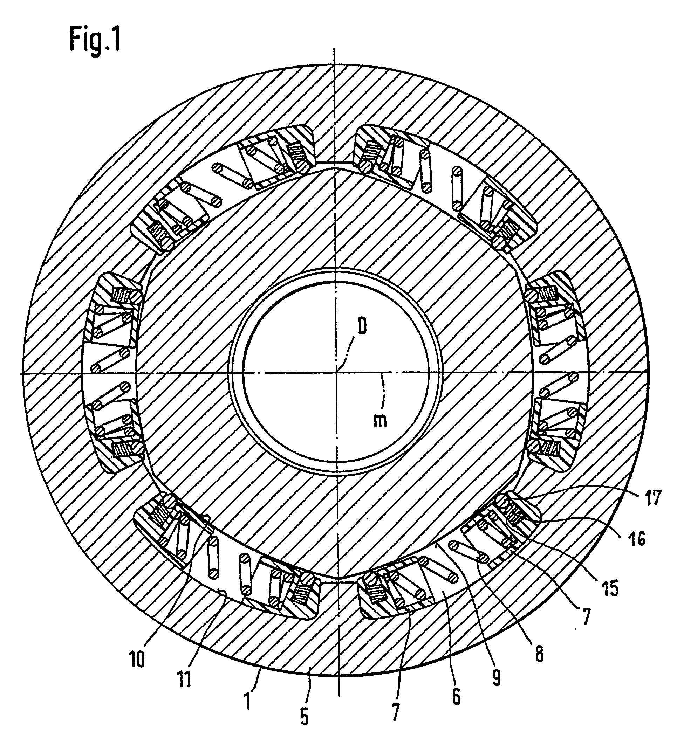

Wie Fig.1 zeigt, weist die Antriebsscheibe 1 einen ringförmigen Teil 5 auf, der einen vorderen Teil der Abtriebsscheibe 2 übergreift und an seiner Innenseite über den Umfang verteilte radiale Taschen 6 aufweist, die zu beiden Enden hin keilförmig verjüngt sind.

In jeder Tasche ist ein Paar Schubkolben 7 angeordnet, die durch mindestens eine Druckfeder 8 auseinandergedrückt werden. Im Leerlauf liegen die Schubkolben 7 gegen die Enden der Taschen 6 an.

Die Mantelfläche 9 der Abtriebsscheibe 2 ist im Querschnitt polygonal ausgebildet und hat einen mittleren Krümmungsradius .R. Dementsprechend ist die der Abtriebsscheibe 2 zugewandte Seite 10 der Schubkolben 7 eben oder leicht gewölbt ausgebildet.

Die Mantelfläche 11 jeder Tasche bildet einen Teilzylinder, dessen Krümmungsachse mit der Drehachse D der Kupplung übereinstimmt oder auf der radialen Mittelebene m durch die Tasche zwischen dieser und der Drehachse D der Kupplung liegt.

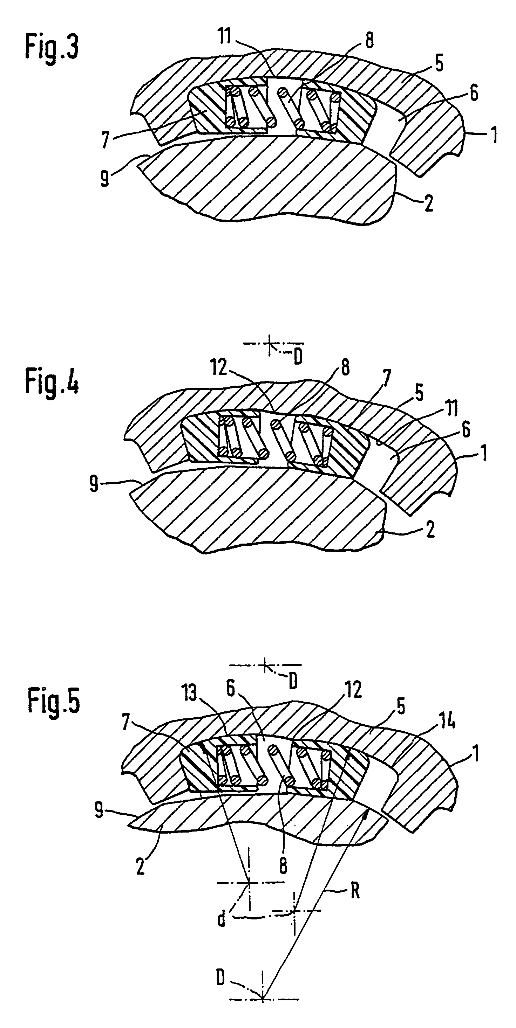

Um einerseits ein Anstoßen der Schubkolben 7 gegeneinander zu vermeiden und andererseits bei sehr hoher Lasteine besonders hohe Reibungskraft und damit eine hohe Dämpfung zu erzeugen, ist, wie Fig.4 zeigt, zweckmäßig in mindestens einigen der Taschen 6 im Bereich deren radialer Mittelebene m eine wulstartige Erhebung 12 in der Mantelfläche 11 vorgesehen, die eine Auflaufschwelle für die Schubkolben 7 bildet.

Eine solche Erhebung kann auch dadurch gebildet werden (Fig.5), daß die Mantelfläche 11 der Tasche 6 aus zwei sich schneidenden Teilzylindern 13,14 besteht, deren Achsen d beiderseits der radialen Mittelebene m durch die Tasche 6 und im Bereich zwischen der Drehachse D der Kupplung und der Tasche 6 liegen. Die Erhebung 12 braucht nur wenige Zehntel Millimeter zu betragen. Die Krümmungsradien der Teilzylinder 13,14 können, müssen aber nicht verschieden sein. Fig.5 ist nicht maßstäblich.

Wie Fig.1 ferner zeigt, sind in den Schubkolben 7 radiale Bohrungen 15 vorgesehen, in denen kleine Druckfedern 16 angeordnet sind, die mittels Übertragungskugeln 17 auf die Mantelfläche 9 der Abtriebsscheibe 2 drücken. Damit wird während des Leerlaufes ein Rückstellmoment von der Antriebs- auf die Abtriebsscheibe , aber so gut wie keine Reibungskraft ausgeübt.

Die Druckfedern 16 könnten ebensogut auch in den Stegen der Abtriebsscheibe 1 zwischen den Taschen 6 angeordnet sein.

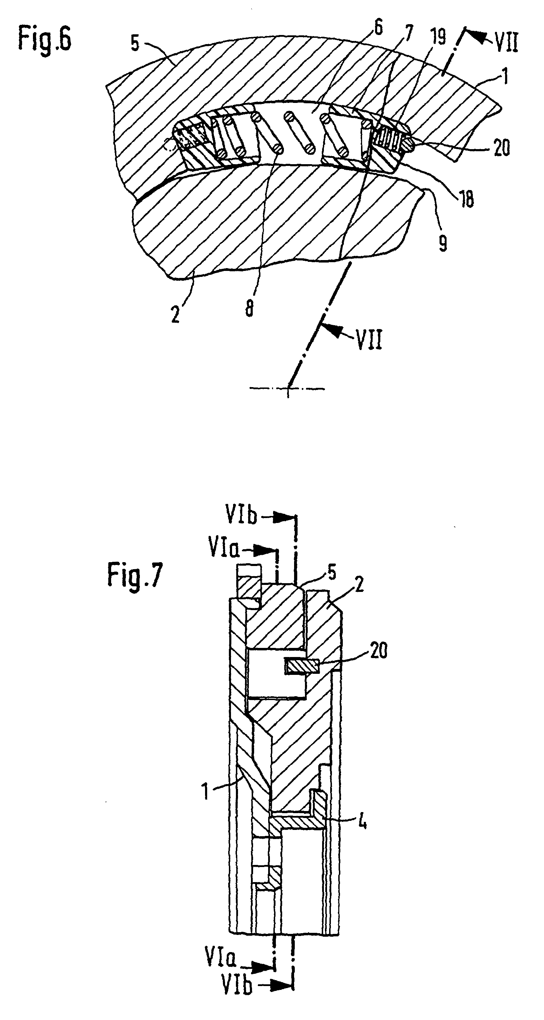

Es ist auch möglich, die Druckfedern in tangentialer Richtung (Fig.6,7) in den Schubkolben 7 oder in der Antriebsscheibe 1 anzuordnen, und sie auf radiale Flächen der Abtriebsscheibe 2 wirken zu lassen, z.B. axial versetzt zu den Taschen 6.

Die Fig.6 und 7 zeigen eine solche Ausführungsform. Hier sind in den Enden der Schubkolben 7 tangentiale Öffnungen 18 vorgesehen, in denen leichte Druckfedern 19 angeordnet sind. Diese wirken im Leerlauf, d.h. wenn die Schubkolben 7 ihre Endstellungen in den Taschen 6 eingenommen haben, gegen axiale Stifte 20, die im rückwärtigen Teil 3 der Abtriebsscheibe 2 befestigt sind und eine radiale Anschlagfläche bilden. Bei geringen Relativbewegungen der Antriebsscheibe 1 gegenüber der Abtriebsscheibe 2 infolge von Leerlauf-Drehschwingungen wirken lediglich die Druckfedern 19, ohne daß die Schubkolben 7 bewegt werden.

Wenn die Antriebsscheibe 1 gedreht wird und ein Drehmoment auf den Abtriebsstrang überträgt, bewegt sie sich relativ zur Abtriebsscheibe 2 und bewegt dann jeweils einen der beiden in einer Tasche 6 befindlichen Schubkolben 7 gegen den anderen Schubkolben 7 (Fig.3). Dabei wird auf die Antriebsscheibe 1 eine Reibungskraft ausgeübt, die zu einer Dämpfung der Drehschwingungen führt.

Im Leerlauf, wenn kein Drehmoment auf die Abtriebsscheibe 2 ausgeübt wird, genügt das von der Feder 16 bzw. 19 ausgeübte Rückstellmoment, um eine Entkopplung der Drehschwingungen zu erreichen. Eine Reibungskraft ist hierbei nicht erforderlich.

Vorteilhaft bestehen aus Kostengründen die Antriebsscheibe 1 aus einem Stahlblechteil und die Abtriebscheibe 2 aus Grauguß. Die Schubkolben bestehen zweckmäßig aus einem warmfesten Kunststoff.

Mit der erfindungsgemäßen Kupplung können teure mechanische oder hydraulische Torsionsschwingungsdämpfer eingespart werden.

## Patentansprüche

1. Kupplung, bestehend aus einer umlaufenden Antriebsscheibe (1) und einer hierzu koaxialen, gleichsinnig umlaufenden Abtriebsscheibe (2) mit Mitteln zur elastischen Kraftübertragung (8), wobei die Antriebsscheibe (1) die Abtriebsscheibe (2) teilweise übergreift (5) und die Mantelfläche (9) der Abtriebsscheibe (2) im Querschnitt polygonal ist,
**dadurch gekennzeichnet,**
**dass** die Antriebsscheibe (1) an der Innenseite des übergreifenden Teils (5) über den Umfang verteilte, radiale Taschen (6) aufweist, die zu ihren Enden leicht keilförmig ausgebildet sind,
**dass** in den Taschen (6) Paare keilförmiger Schubkolben (7) angeordnet sind, die gegeneinander durch mindestens eine Druckfeder (8) auseinander gehalten sind,
**dass** die Schubkolben (7) an ihren der Mantelfläche der Abtriebsscheibe (2) zugewandten Seiten (10) eben oder leicht gewölbt ausgebildet sind und
**dass** an der Antriebsscheibe (1) oder an den Schubkolben (7) Federn (16, 19) vorgesehen sind, die bei Leerlauf lediglich ein Rückstellmoment von der Antriebs- auf die Abtriebsscheibe (1, 2), aber so gut wie keine Reibungskraft ausüben, indem sie auf entsprechende Flächen der Antriebsscheibe (1) oder der Abtriebsscheibe (2) drücken.

2. Kupplung nach Anspruch 1, **dadurch gekennzeichnet, daß** die Mantelfläche (11) jeder Tasche (6) einen Teilzylinder bildet, dessen Krümmungsachse mit der Drehachse (D) der Kupplung übereinstimmt.

3. Kupplung nach Anspruch 1 oder 2, **dadurch gekennzeichnet, daß** die Mittel (16,19) zur Bewirkung eines Rückstellmomentes darin bestehen, daß in der Antriebsscheibe (1) oder in den Schubkolben (7) Druckfedern (16) angeordnet sind, die auf die Abtriebsscheibe (2) einwirken.

4. Kupplung nach einem der Ansprüche 1 bis 3, **dadurch gekennzeichnet, daß** die Antriebsscheibe (1) jeweils im Bereich der radialen Mittelebene durch mindestens eine Tasche (6) eine wulstartige Erhebung (12) auf ihrer Mantelfläche (11) aufweist.

5. Kupplung nach Anspruch 4, **dadurch gekennzeichnet, daß** die Mantelfläche (11) jeder Tasche (6) von zwei sich schneidenden Teilzylindern (13,14) gebildet ist, deren Achsen (d) beiderseits der radialen Mittelebene durch die Tasche (6) zwischen der Drehachse (D) der Kupplung und der Tasche (6) liegen.

6. Kupplung nach einem der Ansprüche 1 bis 5, **dadurch gekennzeichnet, daß** die Abtriebsscheibe (2) aus Grauguß und die Antriebsscheibe (1) als Blechteil ausgebildet sind.

## Claims

1. A clutch comprising a rotating drive disk (1) and a coaxial driven disk (2), rotating in the same direction, with means for elastic power transmission (8) wherein drive disk (1) partially enmeshes (5) with driven disk (2) and the circumferential surface (9) of the driven disk (2) has a polygonal cross section **characterised in that** the drive disk (1) on the inside of meshing part (5) is provided with radial pockets (6) distributed around the circumference, which are slightly tapered towards their ends, and that tapered pistons (7) are placed in pockets (6), which are kept apart by at least one compression spring (8), and that pistons (7) are slightly crowned on their surfaces (10) facing driven disk (2), and that drive disk (1) or pistons (7) are provided with springs (16,19) exerting merely a restoring torque, during idling, from drive disk (1) to driven disk (2), but hardly any friction, by pressing onto the relevant surfaces of drive disk (1) or driven disk (2).

2. The clutch according to claim 1 **characterised in that** the circumferential surface (11) of each pocket (6) forms a partial cylinder, the axis of which coincides with the axis of rotation (D) of the clutch.

3. The clutch according to claims 1 or 2 **characterised in that** the means (16, 19) for generating a restoring torque consists of the fact that compression springs (16) are arranged in drive disk (1) or in pistons (7), which act on driven disk (2).

4. The clutch according to one of the claims 1 to 3 **characterised in that** drive disk (1), in at least one of pockets (6), is provided with a bead-like rise (12) on its circumferential surface (11) in each of the areas where a radial plane intersects with the middle of the pocket.

5. The clutch according to claim 4 **characterised in that** the circumferential surface (11) of each pocket (6) is formed by two intersecting, partial cylinders (13, 14), the axes (d) of which are located on either side of the radial middle plane through pocket (6) in the area between pocket (6) and the axis of rotation (D) of the clutch.

6. The clutch according to one of the claims 1 to 5 **characterised in that** driven disk (2) is made of cast iron and drive disk (1) is made of steel sheet/plate.

## Revendications

1. Accouplement consistant en un disque entraîneur rotatif (1) et en un disque interrupteur (2) coaxial par rapport à celui-ci, tournant dans le même sens, avec des moyens de transmission élastique de force (8), le disque entraîneur (1) empiétant partiellement (5) sur le disque interrupteur (2) et la surface de la chemise (9) du disque interrupteur (2) étant de section transversale polygonale,
**caractérisé en ce que**
le disque entraîneur (1) présente sur la face interne de la partie qui empiète (5) des poches radiales (6) réparties sur le volume, qui sont conçues légèrement en forme de clavettes vers leurs extrémités,
dans les poches (6), des paires de pistons poussoirs (7) en forme de clavettes, qui sont maintenus écartées les unes des autres grâce à au moins un ressort à pression (8), sont disposées,
que les pistons poussoirs (7) sont, sur leurs faces (10) tournées vers la surface de la chemise du disque interrupteur (2), conçus dans une forme plane ou légèrement bombée et
que, sur le disque entraîneur (1) ou sur les pistons poussoirs (7) sont prévus des ressorts (16, 19) qui, en cas de fonctionnement à vide, exercent simplement un moment de rappel du disque entraîneur au disque interrupteur (1, 2), mais pratiquement pas de forces de friction en appuyant sur les surfaces correspondantes du disque entraîneur (1) ou du disque interrupteur (2).

2. Accouplement selon la revendication 1, **caractérisé en ce que** la surface de la chemise (11) de chaque poche (6) forme un cylindre partiel, dont l'axe de bombement coïncide avec l'axe de rotation (D) de l'accouplement.

3. Accouplement selon la revendication 1 ou 2, **caractérisé en ce que** les moyens (16, 19) provoquant un moment de rappel consistent **en ce que**, dans le disque entraîneur (1) ou dans les pistons poussoirs (7) des ressorts à pression (16) qui agissent sur le disque interrupteur (2) sont disposés.

4. Accouplement selon une des revendications 1 à 3, **caractérisé en ce que** le disque entraîneur (1) présente respectivement, dans la zone du plan radial médian traversant au moins une poche (6), une surélévation (12) en forme de renflement sur sa surface de chemise (11).

5. Accouplement selon la revendication 4, **caractérisé en ce que** la surface de la chemise (11) de chaque poche (6) est constituée par deux cylindres partiels (13, 14) se recoupant, dont les axes (d) sont situés des deux côtés du plan radial médian traversant la poche (6) entre l'axe de rotation (D) de l'accouplement et la poche (6).

6. Accouplement selon une des revendications 1 à 5, **caractérisé en ce que** le disque interrupteur (2) est réalisé en fonte grise et que le disque entraîneur (1) se présente sous forme d'une pièce en tôle.
